# EUROPEAN PATENT SPECIFICATION

(11) **EP 0 408 639 B1**
(45) Date of publication and mention of the grant of the patent: **14.07.1993**
(21) Application number: 89904582.7
(22) Date of filing: 03.04.1989
(51) Int. Cl.: B29C 33/42, B29C 45/26, B29C 67/14, B29K 105/08

(54) **METHOD OF INJECTING A RESIN INTO FIBRES WITHIN A MOULD**
VERFAHREN ZUM EINSPRITZEN EINES KUNSTSTOFFES IN EINEN FASERWERKSTOFF IN EINER FORM
PROCEDE D'INJECTION D'UNE RESINE DANS DES FIBRES A L'INTERIEUR D'UN MOULE

(30) Priority: 05.04.1988 GB 8807907
(43) Date of publication of application: 23.01.1991
(73) Proprietor: 3-D COMPOSITES LIMITED, Bradford BD1 4 TB (GB)
(72) Inventor: NEWTON, John, Reginald, Bowness-on-Windermere Cumbri (GB)
(74) Representative: Wharton, Peter Robert
(86) International application number: GB8900340
(87) International publication number: WO8909686

(56) References cited:
- EP-A- 0 234 341
- EP-A- 0 243 617
- WO-A-89/00495
- US-A- 2 913 036

## Description

This invention relates to a method of moulding and in particular relates to a method of moulding complex composite articles from curable resins.

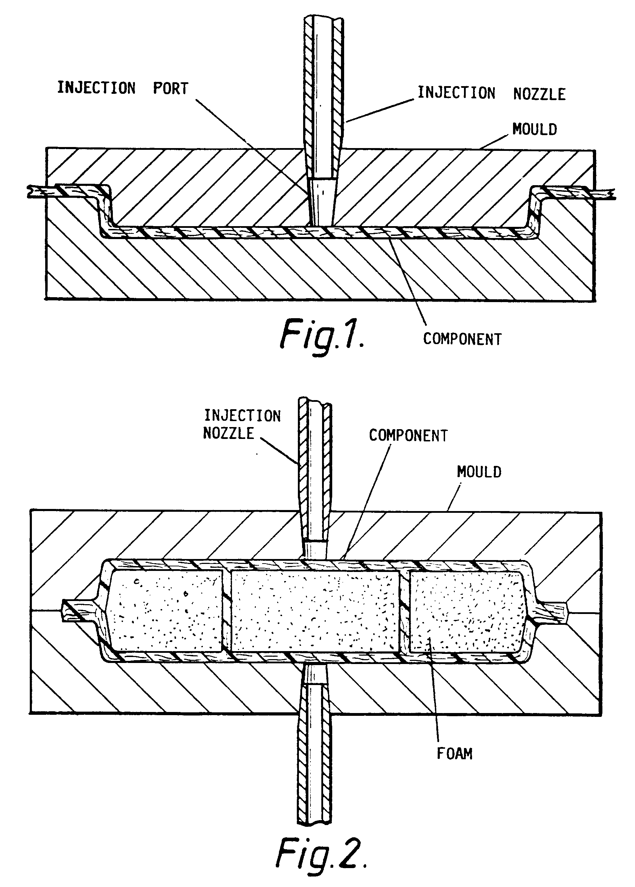

A common method of moulding composites, known as the resin transfer moulding process, involves placing a structure of reinforcing fibres, for example glass, carbon or kevlar, into a mould and then injecting a liquid resin into the mould so that it penetrates though the entire reinforcing structure. The resin then cures producing a resin/fibre composite with good mechanical properties and relatively low weight. The final mechanical properties depend on the type of reinforcing fibre and resin employed. A conventional arrangement for transferring resin from a resin injection machine into the fibres in a mould is shown in figure 1 of the accompanying drawings. The nozzle from the resin injection machine is clamped to the injection port of the mould and pressurised resin is fed from the injection machine, entering the reinforcing fibres at the injection port. On large mouldings more than one port may be used but this presents problems as the resin cures in the feed system and means must be provided for removing the cured resin.

In recent years there has been a significant increase in the complexity of mouldings made by the resin transfer moulding process brought about by the introduction of preforming which allows the assembly of complex configurations of reinforcing fibres together with, for example, the use of foamed plastics material inserts. Structures may now be produced of the type shown in figure 2 of the accompanying drawings where two skins are separated by foam inserts and interconnecting members are included. In order to inject resin successfully it is preferable to inject into both skins simultaneously. The mould used for such a component would, as illustrated, normally be split in such a way that the two skins lie on alternative mould faces. Therefore injecting resin into such a component requires two injection ports as shown in figure 2. In practice this is difficult to achieve since either two injection guns would be required or the resin would have to be gated to each port, or one port may be used but located at one edge thereby lengthening the injection cycle time.

Our PCT publication no. WO89/00495 provides a method of moulding complex shapes having a skin portion to be injected with the resin and a core portion impenetrable to resin which comprises providing a core portion bearing one or more galleries placing same in a suitable mould and injecting resin into the gallery whereby it is rapidly transmitted to all portions of the skin.

The use of a gallery or galleries in the otherwise resin-impermeable core allows resin to be ducted to wherever needed according to the mould configuration by employing a single resin injection nozzle. The injection nozzle is inserted through the injection port through one skin of the article to be moulded into the gallery thereof. On completion of the injection cycle the nozzle is removed prior to the resin curing and the injection port is plugged. The method of the invention allows very complex structures to be produced and cycle times reduced.

We have now found that a similar effect can be obtained by providing galleries in the inner surface of the mould rather than the core.

US Patent Specification Number 2,913,036 describes a moulding method wherein a single, rigid mould is employed together with a flexible elastic bag or envelope. In contrast the present invention is concerned with two mating rigid mould halves.

According to the present invention there is provided a mould for use in the moulding of composite articles as set out in claim 1 of the the claims appended hereto.

Normally, it is preferable not to have galleries in the mould since this means that the mould itself will need to be modified, which is much less convenient than providing galleries in a foamed plastics core in accordance with our above PCT application. However, where no core is employed the method of the invention is useful. This is particularly the case in relation to certain highly stressed components such as springs and suspension arms in which cores or cross fibres cannot be tolerated.

Preferably these galleries, where they are open to the skin, are so arranged as to prevent substantial deformation of the fibres of the skin into them as described more fully hereinafter.

The method of the invention is primarily useful in relation to composites which are highly stressed in use and therfore require to have high proportion, e.g. 60% by weight or more, of fibres in the moulded article. We refer to the discussion in our above PCT application on the difficulties in injecting resin at a sufficiently fast rate into such high densities of fibre. Such considerations are equally applicable here, and the present invention overcomes such difficulties allowing such articles to be moulded much more quickly than hitherto employing much lower pressures.

The invention will be described further, by way of example, with reference to the accompanying drawings, in which:
Figure 1 is a diagrammatic cross sectional view of a mould used for conventional resin transfer moulding;
Figure 2 is a similar view to figure 1 of a mould used for complex shapes and employing two injection nozzles;
Figure 3 is a similar view to figure 2 of a mould adapted to carry out the method of the invention;
Figure 4 is a perspective view of a moulded product produced by another embodiment of the invention;
Figure 5 is section on lines A-A of figure 4; and
Figure 6 is view in direction of arrow B in figure 4.

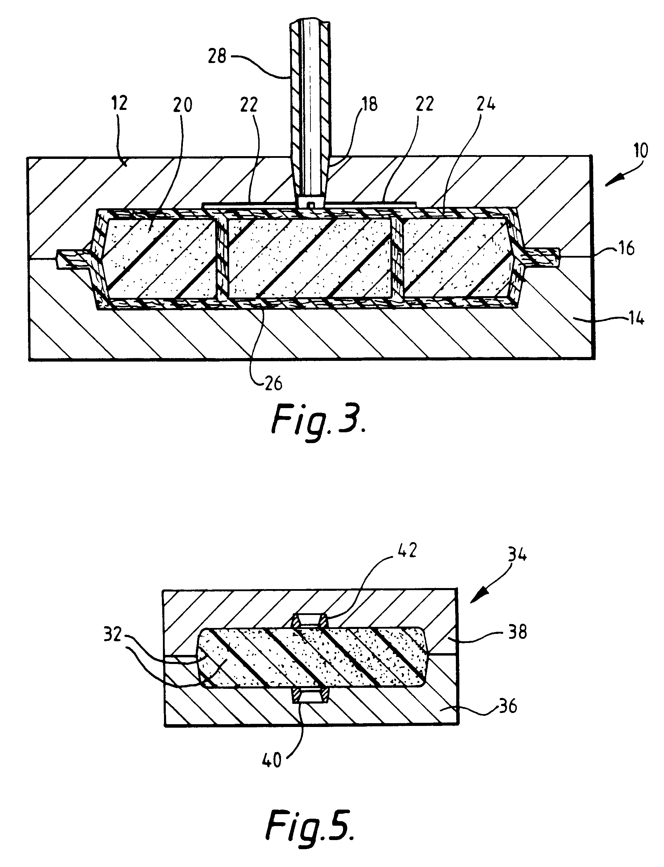

Referring to the drawings, and especially figure 3, it can be seen that a mould 10 for producing a shape such as that shown in figure 2 comprises upper and lower mould halves 12, 14 respectively split at 16 and a single injection port 18. Resin-impenetrable cores 20 of, for example, closed cell foamed plastics material, are placed within the mould cavity surrounded by, for example, reinforcing fibres such as glass, carbon or kevlar, in a similar manner to conventional moulding processes for producing composites. However, in accordance with the invention, the mould half 12 has a gallery 22 comprising a relatively deep but narrow groove or cavity running radially outwards from the nozzle 18 over the upper skin 24 of fibres.

An injection nozzle 28 is adapted to pass through the injection port 18 into the gallery 22. Injection of resin into the gallery 22 ensures that it is quickly and evenly distributed over the upper skin 24. Side vents (not shown) distributed about the split line 16 ensure that air displaced by the resin can leave the mould cavity.

Once injection of the resin is complete the injection nozzle 28 is withdrawn and the port 18 is plugged after which the resin is cured or allowed to cure. Demoulding in a conventional manner produces an article similar to that produced by the conventional mould of figure 2 and yet the moulding apparatus employed allows rapid moulding times even under low injection pressures since the principal limitation on speed, capilliary flow of resin through the fibre mat comprising the skin, has been essentially circumvented. The galleries not only increase distribution of resin but greatly enlarge the area of fibre open to receiving the resin, which speeds up passage of resin through the fibre layer. Further galleries for the lower skin 26 can be provided if desired.

The galleries will be at the surface of the mould cavity and be partly bounded by the reinforcing fibres constituting the skin. It is preferred that the "galleries" be sufficiently narrow so that the skin portion does not deflect or distort into them. Such surface galleries may advantageously be in the form of a fan or web of interconnecting channels.

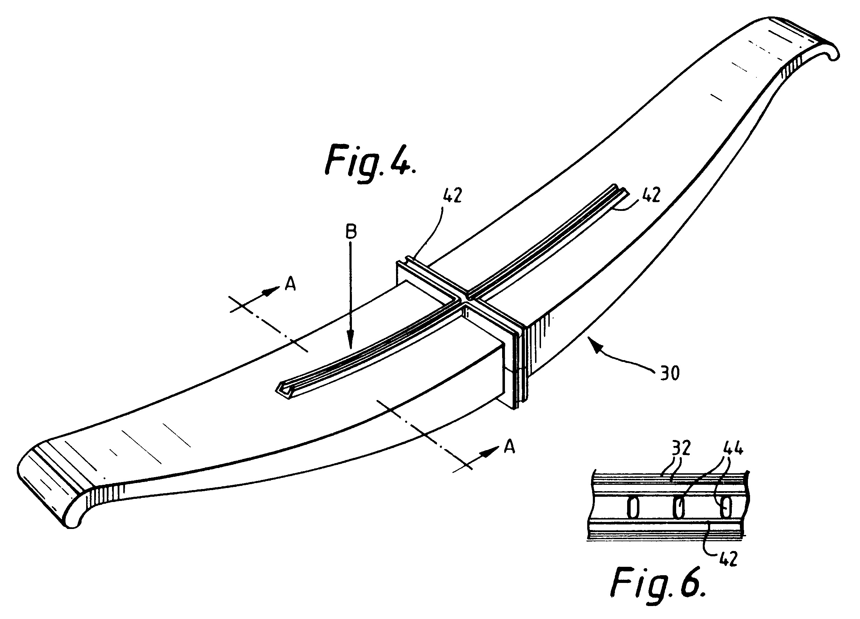

Referring now to figures 4 to 6, an embodiment of the invention is illustrated which is particularly useful in connection with very highly stressed components such as springs and suspension arms made from composite materials. Such components require that all the fibres lay in one direction. The inclusion of cross fibres or cores cannot be tolerated as these act as stress raisers and lower the strength and performance of the product. However, the principles of the method of the invention can be applied to make these products also very much faster than was hitherto possible. Figure 4 depicts a component 30, in this case a motor vehicle spring, formed of a composite material consisting of an array of glass or other fibres 32 laid generally parallel to the longitudinal axis of the component. No core is employed. The component 30 is produced in a mould 34 having two mould halves 36, 38 as before, each of the halves being provided with channels 40. Since all the fibres 32 in the component in question are aligned in one direction, a channel running in that direction could normally not be employed since the fibres would tend to be pressed into the channel thus blocking it. In order to overcome this, and in accordance with this embodiment of the invention, channel inserts 42 are provided within the channels. The inserts are generally channel shaped themselves and are provided with a series of transverse slots or openings 44 along their length. Thus, in the case of the channels 40 running parallel to the longitudinal axis of the component 30, the slots 44 run transverse to this axis and thus the fibres 32 are prevented from being pressed into the channel. The channels 40 and 42 between them form galleries for resin transfer allowing the resin to be distributed into the fibres 32 through each of the slots 44 along their length.

The product 30 when demoulded has very much the appearance as shown in figure 4 with the channels 40 having solidified resin therein. However, it is a relatively simple matter to strip the channels 40 from the surface of the finished component. Moreover, in the case of spring or suspension units, where aesthetic qualities are not paramount, any slight marking left on the surface by the procedure will be of no account. This embodiment of the invention allows use of a single injection nozzle and yet rapidly distributes resin where it is required in the component being moulded.

A further advantage of this latter embodiment is that the channel inserts 42 can perform a second very valuable function, that is they can be used as clamps to hold the dry fibres in place prior to presenting the fibre structure to the mould. In this way it would be possible automatically to lay-up dry fibres in a fixture, to the configuration of the final component, clamp them together using inserts 42, transfer to the mould and then inject the resin via the gallery network defined by the channels 40. Such a system lends itself to totally automatic operation. It is a relatively simple matter to make the channel components 42 interlocking to achieve the above end.

In certain cases it is desirable to mould on to the composite one or more additional components, e.g. external reinforcing members. Some or all of the channels 42 could be part of such components which, of course, would not be stripped off after demoulding.

Although the method has been described in relation to resin transfer moulding, it will be appreciated that it is of broader applicability and may be used with any composite moulding where 'wicking' of resin through a fibrous reinforcement layer limits the moulding speed and/or requires high injection pressures to be employed.

Since the resin in the gallery 22 will solidify and appear on the surface of the product as a raised rib, naturally the positioning of galleries must be chosen so that this will not adversely affect the utility of the product, e.g. will appear only on the "inside" surface thereof; alternatively such 'ribs' can be stripped or machined off before use.

## Claims

1. A mould for use in the moulding of complex shapes by injecting a plastics material resin into fibres within the mould comprising a pair of mould halves (12,14) meeting at a split line (16) and characterised in that one or more galleries (22,40) is provided in at least one of the halves communicating with the fibres, the gallery or galleries (22,40) being so arranged as to prevent substantial deformation of the fibres into them.

2. A mould as claimed in claim 1 in which the galleries (22,40) are arranged transverse to the length of some or all of the fibres and are sufficiently narrow to prevent deformation of the fibres into them.

3. A mould as claimed in claim 1 in which the galleries (40) lie in the same general direction as the length of the fibres and channel inserts (42) provided with a series of transverse slots (44) are employed within the galleries (40) to prevent fibres being pressed into the galleries (40).

4. A mould as claimed in claim 3 in which the channel inserts (42) comprise generally channel shaped plastics material strips having a series of transverse slots (44) therein.

5. A method of moulding complex shapes, characterised in that it comprises placing fibres within a mould, said mould comprising a pair of mould halves (12,14) meeting at a split line (10) and having one or more galleries (22,40) in at least one of the halves communicating with the fibre, the gallery or galleries being so arranged as to prevent substantial deformation of the fibres into them, injecting resin into the mould and allowing it to cure before demoulding.

6. A method as claimed in claim 5 in which the resin is injected directly into one or more galleries (22,40).

7. A method as claimed in claim 5 or 6 in which the fibre density in the final composite article is in the region of 60% by weight or more.

8. A method as claimed in any of claims 5 to 7 in which the ribs produced by the galleries (22,40) are stripped off the product after de-moulding.

9. A method as claimed in any of claims 5 to 8, wherein the galleries (40) lie in the same general direction as the length of the fibres and channel inserts (42) are provided within said galleries (40).

10. A method as claimed in claim 9 in which the channel inserts (42) are employed as clamps to hold the dry fibres in place prior to presenting the fibres to the mould (12,14).

11. A method as claimed in claim 10 in which the channel inserts (42) are interlocking.

## Patentansprüche

1. Form zur Verwendung beim Formen von komplexen Gestalten durch Einspritzen eines Kunststoff-Harzes in Fasern in der Form, wobei die Form ein Paar von Formhälften (12, 14) aufweist, die an einer Trennlinie (16) aufeinandertreffen, dadurch gekennzeichnet, daß in wenigstens einer der Hälften ein oder mehr Verteilerkanäle (22, 40) vorgesehen sind, die mit den Fasern in Verbindung sind, wobei der Verteilerkanal bzw. die Verteilerkanäle (22, 40) angeordnet sind, um eine erhebliche Verformung der Fasern in sie hinein zu verhindern.

2. Form nach Anspruch 1, wobei die Verteilerkanäle (22, 40) quer zu der Länge von einigen oder sämtlichen Fasern angeordnet und hinreichend eng sind, um eine Verformung der Fasern in sie hinein zu verhindern.

3. Form nach Anspruch 1, wobei die Verteilerkanäle (40) in der gleichen allgemeinen Richtung wie die Länge der Fasern liegen und Kanaleinsätze (42), die mit einer Serie von Querschlitzen (44) versehen sind, in den Verteilerkanälen (40) verwendet sind, um zu verhindern, daß Fasern in die Verteilerkanäle (40) gepreßt werden.

4. Form nach Anspruch 3, wobei die Kanaleinsätze (42) allgemein kanalförmige Kunststoff-Streifen aufweisen, in denen eine Serie von Querschlitzen (44) vorgesehen ist.

5. Verfahren zum Formen komplexer Gestalten, dadurch gekennzeichnet, daß es folgende Schritte aufweist: Einbringen von Fasern in eine Form, wobei die Form ein Paar von Formhälften (12, 14) aufweist, die an einer Trennlinie (10) aufeinandertreffen und ein oder mehr Verteilerkanäle (22, 40) in wenigstens einer der Hälften haben, die mit den Fasern in Verbindung sind, wobei der Verteilerkanal bzw. die Verteilerkanäle angeordnet sind, um eine erhebliche Verformung der Fasern in sie hinein zu verhindern, Einspritzen von Harz in die Form und Zulassen, daß es aushärtet, bevor entformt wird.

6. Verfahren nach Anspruch 5, wobei das Harz direkt in ein oder mehr Verteilerkanäle (22, 40) eingespritzt wird.

7. Verfahren nach Anspruch 5 oder 6, wobei die Faserdichte in dem fertigen Verbundgegenstand im Bereich von 60 Gew.-% oder höher liegt.

8. Verfahren nach einem der Ansprüche 5-7, wobei die von den Verteilerkanälen (22, 40) gebildeten Rippen nach dem Entformen von dem Produkt abgestreift werden.

9. Verfahren nach einem der Ansprüche 5-8, wobei die Verteilerkanäle (40) in der gleichen allgemeinen Richtung wie die Länge der Fasern liegen und in den Verteilerkanälen (40) Kanaleinsätze (42) vorgesehen sind.

10. Verfahren nach Anspruch 9, wobei die Kanaleinsätze (42) als Festlegeeinrichtungen verwendet werden, um die trockenen Fasern in ihrer Lage zu halten, bevor die Fasern in die Form (12, 14) eingebracht werden.

11. Verfahren nach Anspruch 10, wobei die Kanaleinsätze (42) ineinandergreifen.

## Revendications

1. Moule utilisable pour le moulage de formes complexes par injection d'une résine de matière plastique dans des fibres disposées à l'intérieur du moule, comprenant deux demi-moules (12,14) assemblés à l'endroit d'une ligne de joint (16), caractérisé en ce qu'une ou plusieurs galeries (22,40) sont prévues dans au moins un des demi-moules et communiquent avec les fibres, la ou les galeries (22,40) étant agencées de façon à empêcher une déformation sensible des fibres et leur pénétration dans les galeries.

2. Moule suivant la revendication 1, dans lequel les galeries (22,40) sont disposées transversalement à la longueur d'une partie ou de la totalité des fibres et elles sont suffisamment étroites pour empêcher une déformation des fibres vers l'intérieur des galeries.

3. Moule suivant la revendication 1, dans lequel les galeries (40) s'étendent dans la même direction générale que la longueur des fibres, et des inserts de canal (42) comportant une série de fentes transversales (44) sont employés à l'intérieur des galeries (40) pour empêcher les fibres d'être pressées vers l'intérieur des galeries (40).

4. Moule suivant la revendication 3, dans lequel les inserts de canal (42) comprennent des bandes de matière plastique sensiblement en forme de U comportant une série de fentes transversales (44).

5. Procédé de moulage de formes complexes, caractérisé en ce qu'il comprend la mise en place de fibres dans un moule, ledit moule comprenant deux demimoules (12,14) assemblés à l'endroit d'une ligne de joint (10) et comportant une ou plusieurs galeries (22,40) dans au moins un des demi-moules et en communication avec les fibres, la ou les galeries étant agencées de façon à empêcher une déformation notable des fibres vers l'intérieur des galeries ; l'injection de résine dans le moule; et l'attente du durcissement de la résine avant le démoulage.

6. Procédé suivant la revendication 5, dans lequel la résine est injectée directement dans une ou plusieurs galeries (22,40).

7. Procédé suivant la revendication 5 ou 6, dans lequel la densité des fibres dans l'article composite final est de l'ordre de 60% en poids ou plus.

8. Procédé suivant une quelconque des revendications 5 à 7, dans lequel les nervures produites par les galeries (22,40) sont détachées du produit après démoulage.

9. Procédé suivant une quelconque des revendications 5 à 8, dans lequel les galeries (40) s'étendent dans la même direction générale que la longueur des fibres, et des inserts de canal (42) sont prévus dans les dites galeries (40).

10. Procédé suivant la revendication 9, dans lequel les inserts de canal (42) sont employés comme brides de maintien des fibres sèches en place avant l'installation des fibres dans le moule (12,14).

11. Procédé suivant la revendication 10, dans lequel les inserts de canal (42) sont interconnectés.
